# EUROPÄISCHE PATENTSCHRIFT

(11) **EP 0 947 384 B1**
(45) Veröffentlichungstag und Bekanntmachung des Hinweises auf die Patenterteilung: **12.05.2004**
(21) Anmeldenummer: 99101683.3
(22) Anmeldetag: 08.02.1999
(51) Int. Cl.: B60N 3/08, B60R 7/04, B60R 7/06

(54) **Abdeckung für eine Öffnung in einem Fahrzeugaufbau-oder -ausstattungsteil**
Cover for an opening in a vehicle body or fitting part
Capot pour une ouverture dans une carosserie ou une pièce d'équipement de véhicule automobile

(30) Priorität: 31.03.1998 DE 19814215
(43) Veröffentlichungstag der Anmeldung: 06.10.1999
(73) Patentinhaber: Volkswagen Aktiengesellschaft, 38436 Wolfsburg (DE)
(72) Erfinder: Junige, Bert, Dipl.-Ing., 38543 Hillerse (DE); Scholz, Eckhard, 38154 Königslutter (DE)

(56) Entgegenhaltungen:
- EP-A- 0 074 026
- DE-A- 3 432 739
- DE-A- 3 602 197
- DE-C- 19 510 749
- FR-A- 2 603 531
- US-A- 5 520 313

## Beschreibung

Die Erfindung betrifft eine Abdeckung für eine Öffnung in einem Fahrzeugaufbau- oder - ausstattungsteil, die einen schwenkbaren Deckel aufweist.

Es ist bekannt, eine in einem Fahrzeugaufbau- oder -ausstattungsteil angeordnete Öffnung mit einem Deckel zu versehen, der über der Öffnung schwenkbar angeordnet ist und beim Freigeben der Öffnung über diese hinweg- oder in diese hineingeschwenkt wird. Beispielsweise sind Aschebehälter mit einem schwenkbaren Deckel versehen, der an der Außenseite des Aschebehälters um eine Achse schwenkbar gehaltert ist und zur Freigabe der Ascheröffnung über diesen geschwenkt und dabei in einen den Aschebehälter aufnehmenden Schacht hineingeschwenkt wird. Der Deckel schließt in seiner Schließstellung im wesentlichen oberflächenbündig mit dem Fahrzeugaufbau- oder -ausstattungsteil ab, wobei jedoch zwischen diesem und dem Deckel auf der Seite, zu der dieser in die Offenstellung geschwenkt wird, eine von der Gestaltung, insbesondere auch der Dicke des Deckels abhängige Bewegungsfuge gegeben sein muß, die ein Anstoßen des Deckels am Fahrzeugaufbau- oder -ausstattungsteil verhindert und eine Schwenkbewegung überhaupt erst ermöglicht. Diese Bewegungsfuge kann das Erscheinungsbild des jeweiligen Interieurbereiches erheblich stören.

In der DE 34 32 739 A1 ist ein Kraftfahrzeug mit einem in seiner Armaturentafel vorgesehenen, einen Deckel aufweisenden Ablagefach offenbart, wobei der Deckel durch beidseitig des Ablagefachs vorgesehene Kulissenführungen von der Öffnung des Ablagefachs weg in eine unterhalb des Ablagefachs vorgesehene, nicht in den Fahrgastraum ragende Position bewegbar ausgebildet ist. Der Deckel ist entsprechend der Kontur der Armaturentafel gekrümmt ausgebildet, wobei die Kulissenführungen ebenfalls entsprechend gekrümmt verlaufen. Die Kulissenführungen sind in Seitenteilen des Ablagefachs vorgesehen, wobei an jedem Seitenteil jeweils zwei Kulissenführungen sich teilweise überlappend hintereinander angeordnet sind. Der Deckel weist innenseitig zwei nach innen gerichtete Arme auf, an welchen jeweils Nockenvorsprünge vorgesehen sind, mit denen der Deckel in die Kulissenführungen greift. Die oberste Kulissenführung besitzt zunächst einen kurzen, in Richtung des Deckels weisenden Kulissenbereich. Durch diese Ausgestaltung wird erreicht, dass der Deckel zu Beginn des Öffnungsvorganges zunächst von dem Ablagefach abhebt, sodass er anschließend, ohne über Teile des Ablagefaches oder der Armaturentafel zu scheuern, verschoben werden kann. Um zu verhindern, dass sich der Deckel aufgrund seines Gewichtes selbsttätig öffnet, ist er durch eine in die Armaturentafel hineingerichtete Zugfeder in Schließstellung vorgespannt. Die Zugfeder ist an einem Ende des obersten Armes des Deckels angelenkt.

Der vorliegenden Erfindung liegt die Aufgabe zugrunde, eine Abdeckung mit einem schwenkbaren Deckel für eine Öffnung in einem Fahrzeugaufbau- oder -ausstattungsteil nach dem Oberbegriff des Anspruchs 1 zu schaffen, bei der die für eine Schwenkbewegung des Deckels erforderliche Bewegungsfuge erheblich verschmälert werden kann.

Diese Aufgabe wird bei einer Abdeckung nach dem (z.B. durch die o.g. DE 34 32 739 A1 bekannten) Oberbegriff des Anspruchs 1 durch dessen kennzeichnende Merkmale gelöst.

Die erfindungsgemäße Abdeckung umfasst einen an einer Halterung angeordneten und zwischen einer Schließstellung und einer Offenstellung schwenkbaren Deckel, wobei die Halterung eine Kulissenführung mit einer Führungskulisse und Gleitelemente aufweist. Die Führungskulisse ist aus einem offenstellungsseitigen und einem schließstellungsseitigen Abschnitt gebildet und mit einer die Schließstellung des Deckels definierenden Abwinklung versehen, wobei Elemente zur Arretierung des Deckels in der Schließstellung angeordnet sind. Die erfindungsgemäße Abdeckung ist weiter dadurch gekennzeichnet, dass die Abwinklung an dem schließstellungsseitigen Ende des offenstellungsseitigen Abschnitts der Führungskulisse ausgebildet ist, und dass der Deckel, der in seiner Schließstellung mit einer Bewegungsfuge mit dem Fahrzeugaufbau- oder -ausstattungsteil abschließt, durch Druck aus seiner Arretierung lösbar ist.

Die Abwinklung ermöglicht eine Bewegung der offenstellungsseitigen Kante des Deckels beim Einschwenken in die definierte Schließstellung im Winkel zu der durch die Führungskulisse vorgegebenen Schwenkbewegung, wobei der Winkel in Abhängigkeit von den Gegebenheiten der Anordnung bis zu 90° betragen kann. Das bedeutet, daß der Deckel bei einer Schwenkung in die Schließstellung bei Erreichen der Abwinklung zu einer Bewegung im wesentlichen quer zur Schwenkbewegung veranlaßt wird. Soll umgekehrt der Deckel aus seiner Schließstellung in die Offenstellung geschwenkt werden, wird er durch die Abwinklung zunächst ebenfalls im wesentlichen quer zur Führungskulisse auf diese zu bewegt. Damit ist der Deckel mit einer äußerst schmalen Bewegungsfuge im Fahrzeugaufbau- oder -ausstattungsteil anordbar, da dessen Bewegung aus der Schließstellung in die Offenstellung mit einer Bewegung quer zur Ebene der Öffnung beginnt und umgekehrt bei einer Bewegung in die Schließstellung mit einer solchen endet.

Dabei ist es insbesondere aus Montagegründen zweckmäßig, die Führungskulisse in einer Wandung am Fahrzeugausstattungsteil auszubilden und die Gleitelemente mit dem Deckel zu verbinden, wobei die Wandung in einer Ebene parallel zur Bewegungsrichtung des Dekkels angeordnet ist.

Die Führungskurve kann aus zwei in Reihe hintereinander angeordneten kreisbogenförmigen Abschnitten gebildet sein, die unterschiedliche Krümmungsmittelpunkte haben. Diese sind so angeordnet, daß der Krümmungsmittelpunkt des einen Abschnittes jeweils auf den anderen Abschnitt zu versetzt ist, so daß die resultierende Führungskurve zwei Kreisbogenabschnitte hat - einen offenstellungsseitigen und einen schließstellungsseitigen -, die einander schneiden, wobei die im Schnittpunkt angelegten Tangenten krümmungsmittelpunktseitig einen stumpfen Winkel bilden. Diese Ausbildung der Führungskulisse hat den Vorteil, daß der für den Deckel benötigte Bewegungsraum reduziert ist.

Die Abwinklung hat vorzugsweise einen spitzen Winkel von kleiner als 45° zur Krümmungskurve des offenstellungsseitigen Abschnitts, damit ein im wesentlichen stufenloses Gleiten des Gleitelementes im Übergangsbereich der Abwinklung zu dem Kreisbogenabschnitt der Führungskulisse ermöglicht ist.

Für jeden Abschnitt der Führungskulisse ist ein Gleitelement vorgesehen. Diese beiden Gleitelemente sind an einer zur Bewegungsrichtung des Deckels und damit auch zu der die Führungskulisse aufweisenden Wandung parallelen Halterungsplatte angeordnet oder ausgebildet, die mit dem Deckel fest verbunden ist. An dieser Halterungsplatte ist eine Rastvertiefung für einen an der Wandung angeordneten Rastvorsprung ausgebildet, wobei die Halterungsplatte auf die Wandung zu elastisch vorgespannt ist, damit das in der Abwinklung befindliche Gleitelement arretiert wird und der Deckel in der Schließstellung gehalten wird.

Vorteilhaft ist es auch, weitere Rastvertiefungen zur Arretierung des Deckels in der Offenstellung und in Zwischenstellungen an der Halterungsplatte vorzusehen, die mit dem an der Wandung angeordneten Rastvorsprung korrespondieren.

Die Halterungsplatte und der Deckel können vorteilhaft einstückig aus Kunststoff ausgebidlet sein, wobei die Oberseite des Deckels mit einem vorbestimmten Design versehen werden kann.

Die Erfindung wird nachstehend an einem Ausführungsbeispiel erläutert. In der zugehörigen Zeichnung zeigen, teilweise schematisch:
- Fig. 1:: eine Seitenansicht einer erfindungsgemäßen Abdeckung an einem Aschebehälter mit einem in seiner Schließstellung befindlichen Deckel,
- Fig. 2:: eine Seitenansicht mit dem in seiner Offenstellung befindlichen Deckel,
- Fig. 3:: eine Draufsicht auf die Halterung der Abdeckung mit in der Schließstellung befindlichem Deckel und
- Fig. 4:: eine Draufsicht mit in der Offenstellung befindlichem Deckel.

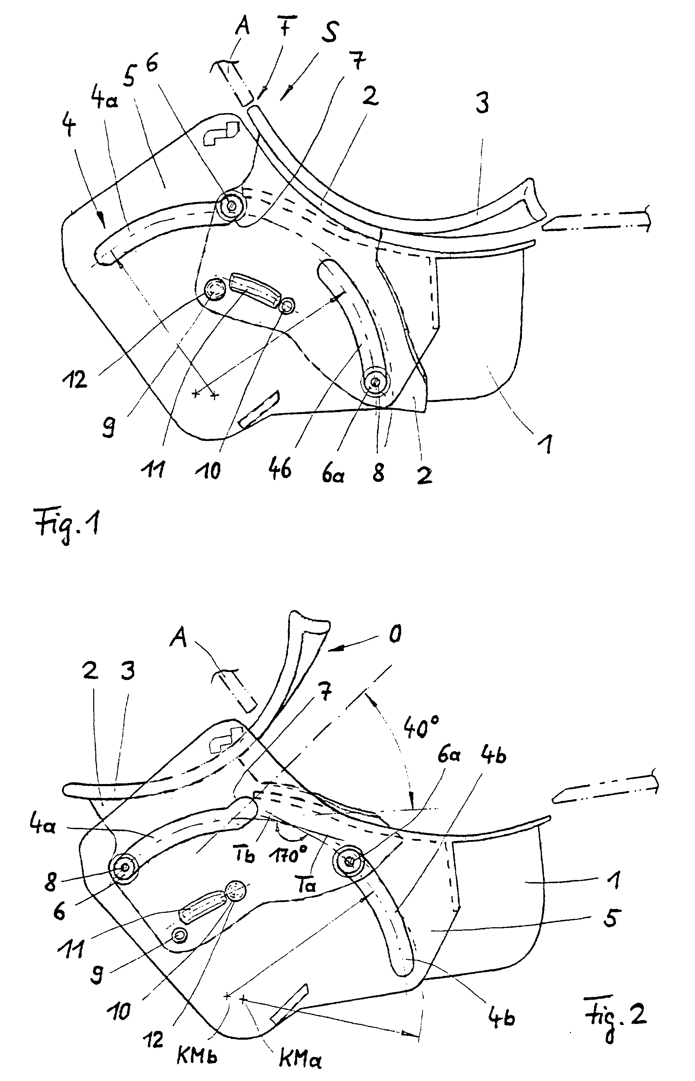

In Fig. 1 ist ein Aschebehälter 1 mit einem an einer Halterungsplatte 2 angeordneten und in seiner Schließstellung S befindlichen Deckel 3 gezeigt, der in dieser oberflächenbündig mit einer 0,7 mm breiten Bewegungsfuge F mit einem 3 mm dicken Auskleidungsteil A abschließt, wobei beidseits des Aschebehälters 1 eine derartige Halterungsplatte 2 ausgebildet ist und mit einer Führungskulisse 4 zusammenwirkt. Diese (4) ist jeweils an einer parallel zur Bewegungsrichtung des Deckels 3 ausgebildeten Wandung 5 am Aschebehälter 1 angeordnet, und die Halterungsplate 2 ist mit Gleitelementen 6 und 6a versehen, die in die Führungskulisse 4 eingreifen.

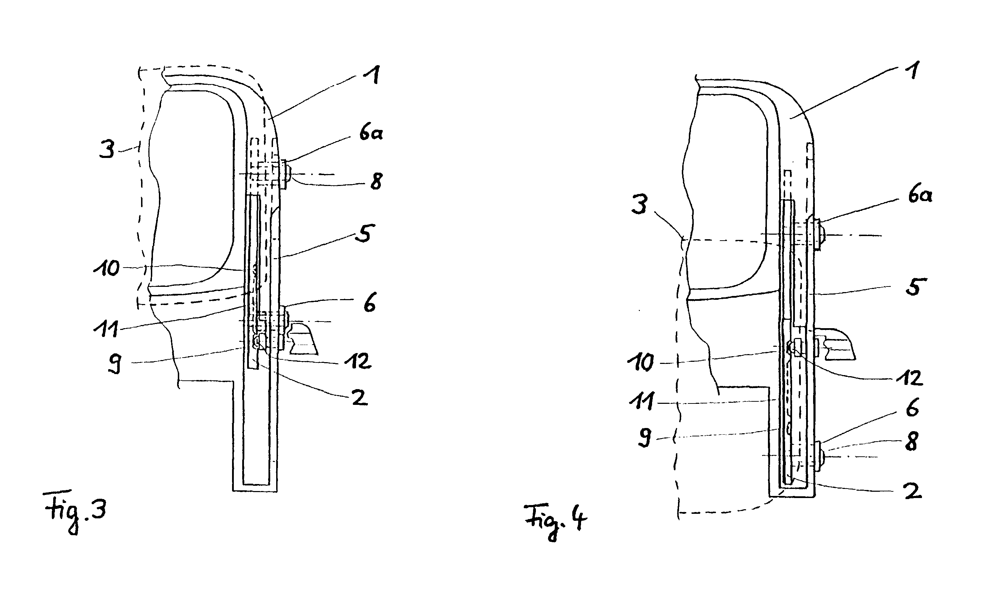

Die Führungskulisse 4 weist zwei in Reihe hintereinander angeordnete kreisbogenförmige Abschnitte 4a und 4b auf, von denen an dem auf der Seite der Offenstellung des Deckels 3 befindlichen Abschnitt 4a schließstellungsseitig eine die Schließstellung des Deckels 3 definierende Abwinklung 7 in einem Winkel von im wesentlichen 40° gegenüber dem Kreisbogen ausgebildet ist. Die Abschnitte 4a und 4b weisen voneinander abweichende Krümmungsmittele KMa und KMb (Fig. 2) auf und sind so angeordnet, daß sich deren Kreisbogen im Bereich zwischen diesen schneiden und die im Schnittpunkt angelegten Tangenten Ta und Tb krümmungsmittelpunktseitig einen stumpfen Winkel von im wesentlichen 170° bilden (Fig. 2). Der Deckel 3 ist mit den Halterungsplatten 2 einstückig verbunden, die parallel zu seiner Bewegungsrichtung ausgebildet sind. Die Gleitelemente 6 und 6a sind aus Kunststoff und von der Außenseite der Wandung 5 mit einer Befestigungsschraube 8 an der Halterungsplatte 2 befestigt, derart, daß eine Bewegung derselben parallel zur Wandung 5 nicht behindert ist (Fig. 3 und 4).

Die Halterungsplatte 2 weist Rastvertiefungen 9, 10 und 11 für einen in der Wandung 5 angeordneten Rastvorsprung 12 auf, von denen die Rastvertiefung 9 zur Arretierung des Gleitelementes 6 in der Abwinklung 7 dient. In Fig. 1 ist die Rastvertiefung im Eingriff mit dem Rastvorsprung 12 dargestellt. Dabei liegt die Halterungsplatte 2 mit dem Rastvorsprung 12 elastisch an den Rastvertiefungen 9, 10 und 11 an. Die Rastvertiefung 10 arretiert im Zusammenwirken mit dem Rastvorsprung 12 den Deckel 3 in der Offenstellung (Fig. 2), und die Rastvertiefung 11 die Halterungsplatte 2 und damit den Deckel 3 in variablen Zwischenstellungen. In Fig. 2 ist die Abdeckung mit in seiner Offenstellung 0 befindlichen Deckel 3 gezeigt. Der Rastvorsprung 12 greift in die Rastvertiefung 10 ein (auch Fig. 4). In der Abbildung sind die Tangenten Ta und Tb gezeigt, die krümmungsmittelpunktseitig einen Winkel von etwa 170° einschließen.

In den Fig. 3 und 4 ist die Ausbildung der Halterung in einer Draufsicht dargestellt. Die Halterungsplatte 2 liegt jeweils am Rastvorsprung 12 an, in Fig. 3 mit der Rastvertiefung 9 (Schließstellung) und in Fig. 4 mit der Rastvertiefung 10 (Offenstellung). Der Rastvorsprung 12 ist aus Metall und im wesentlichen bolzenförmig ausgebildet und in die Wandung 5 eingepreßt. Die Gleitelemente 6 und 6a sind zylinderförmig ausgebildet.

Soll der durch den Deckel 3 geschlossene Aschebehälter 1 (Fig. 1) geöffnet werden, wird der Deckel 3 durch einen leichten Druck aus seiner Arretierung gelöst und dabei in einer Richtung quer zum Auskleidungsteil A und dabei mit dem Gleitelement 6 in der Abwinklung 7 auf den Abschnitt 4a der Führungskulisse 4 zu bewegt. Diese Bewegung geht in eine bogenförmige Bewegung am Ende der Abwinklung 7 über, und der Deckel kann bei gleichzeitiger Bewegung des Gleitelementes 6a im Abschnitt 4b der Führungskulisse 4 bis in die Offenstellung (Fig. 2) geschwenkt werden, in der die Rastvertiefung 10 mit dem Rastvorsprung 12 in Eingriff gelangt und der Deckel arretiert wird. Im Bereich der Rastvertiefung 11 wird die Halterungsplatte ebenfalls gehalten, kann jedoch leicht aus der jeweiligen Stellung geschoben werden. Beim Schließen des Deckels 3 gelangt das Gleitelement 6 am Ende der Schließbewegung in die Abwinklung 7 und wird quer zum Auskleidungsteil in die definierte Schließstellung verbracht und in dieser durch den Eingriff der Rastvertiefung mit dem Rastvorsprung 12 arretiert.

## Patentansprüche

1. Abdeckung für eine Öffnung in einem Fahrzeugaufbau- oder -ausstattungsteil, mit einem an einer Halterung angeordneten und zwischen einer Schließstellung (S) und einer Offenstellung (O) schwenkbaren Deckel (3), wobei die Halterung eine Kulissenführung mit einer Führungskulisse (4) und Gleitelemente (6, 6a) aufweist, wobei die Führungskulisse (4) aus einem offenstellungsseitigen und einem schließstellungsseitigen Abschnitt (4a und 4b) gebildet und mit einer die Schließstellung (S) des Deckels (3) definierenden Abwinklung (7) versehen ist, und wobei Elemente (9; 12) zur Arretierung des Deckels (3) in der Schließstellung (S) angeordnet sind,
**dadurch gekennzeichnet, dass**
die Abwinklung (7) an dem schließstellungsseitigen Ende des offenstellungsseitigen Abschnitts (4a) der Führungskulisse (4) ausgebildet ist, und dass der Deckel (3), der in seiner Schließstellung (S) mit einer Bewegungsfuge (F) mit dem Fahrzeugaufbau- oder -ausstattungsteil (A) abschließt, durch Druck aus seiner Arretierung lösbar ist.

2. Abdeckung nach Anspruch 1,
**dadurch gekennzeichnet,**
**daß** die Führungskulisse (4) an einer parallel zur Bewegungsrichtung des Deckels (3) ausgebildeten Wandung (5) am Fahrzeugaufbau- oder -ausstattungsteil angeordnet und der Deckel (3) mit Gleitelementen (6; 6a) für die Führungskulisse (4) verbunden ist.

3. Abdeckung nach Anspruch 1 oder 2,
**dadurch gekennzeichnet,**
**daß** die Führungskulisse (4) aus einem offenstellungsseitigen und einem schließstellungsseitigen kreisbogenförmigen Abschnitt (4a und 4b) gebildet ist, die in Reihe und mit voneinander abweichenden Krümmungsmittelpunkten angeordnet sind, derart, daß der Krümmungsmittelpunkt (KMa bzw. KMb) des einen Abschnittes (4a bzw. 4b) in Richtung auf den jeweils anderen Abschnitt (4b bzw. 4a) zu versetzt ist.

4. Abdeckung nach einem der Ansprüche 1 bis 3,
**dadurch gekennzeichnet,**
**daß** die Abwinklung (7) in einem spitzen Winkel, vorzugsweise von kleiner als 45°, zur Krümmungskurve des offenstellungsseitigen Abschnitts (4a) angeordnet ist.

5. Abdeckung nach einem der Ansprüche 1 bis 4,
**dadurch gekennzeichnet,**
**daß** der Deckel (3) eine parallel zu seiner Bewegungsrichtung ausgebildete Halterungsplatte (2) aufweist, an der jeweils ein Gleitelement (6; 6a) für einen Abschnitt (4a; 4b) der Führungskulisse (4) angeordnet ist.

6. Abdeckung nach Anspruch 5,
**dadurch gekennzeichnet,**
**daß** an der Halterungsplatte (2) eine Rastvertiefung (9) für einen an der Wandung (5) angeordneten Rastvorsprung (12) zur Arretierung des Gleitelementes (6) in der Abwinklung (7) ausgebildet ist, und daß die Halterungsplatte (2) auf die Wandung (5) zu elastisch vorgespannt ist.

7. Abdeckung nach Anspruch 6,
**dadurch gekennzeichnet,**
**daß** zur Arretierung des Deckels (3) in der Offenstellung und in Zwischenstellungen weitere Rastvertiefungen (10; 11) an der Halterungsplatte (2) vorgesehen sind.

8. Abdeckung nach einem der Ansprüche 5 bis 7,
**dadurch gekennzeichnet,**
**daß** die Halterungsplatte (2) einstückig mit dem Deckel (3) verbunden ist.

## Claims

1. Cover for an opening in a vehicle body or fitting part, having a lid (3) which is arranged on a securing means and can be pivoted between a closed position (S) and an open position (O), the securing means having a slotted-guide mechanism with a guide slot (4) and sliding elements (6, 6a), the guide slot (4) being formed from a section (4a) on the open-position side and a section (4b) on the closed-position side and being provided with an angled section (7) which defines the closed position (S) of the lid (3), and elements (9; 12) being arranged for locking the lid (3) in the closed position (S), **characterized in that** the angled section (7) is formed at the closed-position end of the open-position section (4a) of the guide slot (4), and **in that** the lid (3), which, in its closed position (S), ends at the vehicle body or fitting part (A) with a movement joint (F), can be released from its locking by means of pressure.

2. Cover according to Claim 1, **characterized in that** the guide slot (4) is arranged on a wall (5) of the vehicle body or fitting part, which wall is formed parallel to the direction of movement of the lid (3), and the lid (3) is connected to sliding elements (6; 6a) for the guide slot (4).

3. Cover according to Claim 1 or 2, **characterized in that** the guide slot (4) is formed from a circular-arc-shaped section (4a) on the open-position side and a circular-arc-shaped section (4b) on the closed-position side, said sections being arranged in series and with centre points of curvature which differ from each other, in such a manner that the centre point of curvature (KMa or KMb) of the one section (4a or 4b) is offset in the direction of the other section (4b or 4a) in each case.

4. Cover according to one of Claims 1 to 3, **characterized in that** the angled section (7) is arranged at an acute angle, preferably of smaller than 45°, with respect to the curve of curvature of the section (4a) on the open-position side.

5. Cover according to one of Claims 1 to 4, **characterized in that** the lid (3) has a securing plate (2) which is formed parallel to its direction of movement and on which a respective sliding element (6; 6a) for a section (4a; 4b) of the guide slot (4) is arranged.

6. Cover according to Claim 5, **characterized in that** a latching depression (9) for a latching projection (12) arranged on the wall (5) is formed on the securing plate (2) in order to lock the sliding element (6) in the angled section (7), and **in that** the securing plate (2) is prestressed elastically towards the wall (5).

7. Cover according to Claim 6, **characterized in that** further latching depressions (10; 11) are provided on the securing plate (2) to lock the lid (3) in the open position and in intermediate positions.

8. Cover according to one of Claims 5 to 7, **characterized in that** the securing plate (2) is connected in one piece with the lid (3).

## Revendications

1. Capot pour une ouverture dans un élément de carrosserie ou dans un élément d'équipement d'un véhicule automobile, comportant un couvercle pivotant (3) entre une position de fermeture (S) et une position d'ouverture (O), disposé sur une fixation, la fixation comportant un guide à coulisse avec une coulisse de guidage (4) et des éléments coulissants (6,6a), la coulisse de guidage (4) étant composée d'un segment (4a, 4b) du côté de la position d'ouverture et du côté de la position de fermeture et d'une partie angulaire (7) définissant la position de fermeture (S) du couvercle (3), des éléments (9,12) étant agencés pour arrêter le couvercle (3) en position de fermeture (S), **caractérisé en ce que**, la partie angulaire (7) est formée à l'extrémité côté position de fermeture du segment (4a) situé du côté de la position d'ouverture de la coulisse de guidage (4), et **en ce que** le couvercle (3) qui dans sa position de fermeture (S) se referme sur l'élément de carrosserie ou sur l'élément d'équipement du véhicule automobile (A) par l'intermédiaire d'un joint de dilatation (F), peut être sorti de sa position d'arrêt par pression.

2. Capot selon la revendication 1, **caractérisé en ce que** la coulisse de guidage (4) est disposée sur l'élément de carrosserie ou sur l'élément d'équipement du véhicule automobile, sur une paroi (5) conçue parallèlement au sens de déplacement du couvercle (3) et **en ce que** le couvercle (3) est relié à des éléments coulissants (6,6a) pour la coulisse de guidage (4).

3. Capot selon l'une quelconque des revendications 1 ou 2, **caractérisé en ce que** la coulisse de guidage (4) est formée d'un segment (4a et 4b) en arc de cercle du côté de la position d'ouverture et du côté de la position de fermeture, lesquels sont disposés en ligne et avec des centres de courbures différents les uns des autres, de manière à ce que le centre de courbure (KMa ou KMb) de l'un des segments (4a ou 4b) soit décalé en direction de l'autre segment respectif (4b ou 4a).

4. Capot selon l'une quelconque des revendications 1 à 3, **caractérisé en ce que** la partie angulaire (7) est disposée dans un angle aigu, de préférence inférieur à 45°, par rapport à la ligne de courbure du segment côté position d'ouverture (4a).

5. Capot selon l'une quelconque des revendications 1 à 4, **caractérisé en ce que** le couvercle (3) comporte une plaque de fixation (2) parallèle au sens de son mouvement, sur laquelle est disposé respectivement un élément coulissant (6, 6a) pour un segment (4a, 4b) de la coulisse de guidage (4).

6. Capot selon la revendication 5, **caractérisé en ce qu'**un creux à encoche (9) destiné à une saillie à crans (12) agencée sur la paroi (5) pour l'arrêt de l'élément coulissant (6) dans la partie angulaire (7) est formé sur la plaque de fixation (2), et **en ce que** la plaque de fixation (2) est précontrainte de façon élastique sur la paroi (5).

7. Capot selon la revendication 6, **caractérisé en ce que** d'autres creux à encoches (10,11) sont prévus sur la plaque de fixation (2) pour l'arrêt du couvercle (3) en position d'ouverture et dans des positions intermédiaires.

8. Capot selon l'une quelconque des revendications 5 à 7, **caractérisé en ce que** la plaque de fixation (2) est reliée au couvercle (3) en monobloc.
